# EUROPEAN PATENT SPECIFICATION

(11) **EP 3 434 947 B1**
(45) Date of publication and mention of the grant of the patent: **16.12.2020**
(21) Application number: 17182968.2
(22) Date of filing: 25.07.2017
(51) Int. Cl.: F16K 27/06, F16K 31/04

(54) **AN ASSEMBLY COMPRISING AN INDUSTRIAL VALVE UNIT, AN ACTUATOR AND A CONNECTOR RELEASABLY CONNECTING THE VALVE UNIT TO THE ACTUATOR**
ANORDNUNG MIT EINER INDUSTRIEVENTILEINHEIT, EINEM AKTUATOR UND EINEM VERBINDER, DER DIE VENTILEINHEIT LÖSBAR MIT DEM AKTUATOR VERBINDET
ENSEMBLE COMPRENANT UNE UNITÉ DE SOUPAPE INDUSTRIELLE, ACTIONNEUR ET CONNECTEUR RELIANT AMOVIBLE L'UNITÉ DE SOUPAPE À L'ACTIONNEUR

(43) Date of publication of application: 30.01.2019
(73) Proprietor: Mars Valve Europe A/S, 7100 Vejle (DK)
(72) Inventor: SVENDSEN, Karl Henrik Aarup, 7120 Vejle Øst (DK)
(74) Representative: Zacco Denmark A/S

(56) References cited:
- EP-A2- 0 132 989
- WO-A2-2010/142965
- AU-A- 6 992 474
- BE-A- 566 738
- US-A- 3 290 003
- US-A- 3 976 093
- US-A- 5 178 483
- US-A1- 2013 276 454
- US-A1- 2015 354 634

## Description

### Background of the invention

In process plants with multiple pipe strings and branches there may be hundreds of actuators, each being coupled to a respective ball valve unit, and it is often necessary to service the actuators at least once a year. This requires the actuator to be removed and/or replaced by maintenance staff, which procedure is cumbersome and time-consuming.

US3,290,003 discloses an assembly comprising: - a valve unit, - an actuator, - a valve drive shaft, and - a connector releasably connecting said valve unit to said actuator, said connector comprising: - - a clamp mechanism and - - two connector parts defining a passage for said drive shaft,each connector part having: - a peripheral wall, - a first side with a connector interface, - a second, opposite side with a connector flange, and - a peripheral face for engagement by said clamp mechanism, each connector part being connected to one of said valve unit and said actuator via its connector flange, - said clamp mechanism including a pair of movable wings, each wing extending around a respective portion of said two connector parts, - each of said wings having opposite side flanges configured for riding on said faces of said connector parts upon said wings being moved towards said side walls into a clamping position.

EP0132989A2 discloses an assembly with a valve unit, a connector with a clamp mechanism having wings pivotally connected to the housing of the valve unit.

### Summary of the invention

The present invention solves the aforementioned problem by providing an assembly allowing a relatively speedy disengagement and engagement of the actuator.

Specifically, an assembly according to claim 1 is proposed comprising: - a valve unit, such as a ball valve unit, - an actuator, - a valve drive shaft, and - a connector releasably connecting said valve unit to said actuator, said connector comprising: - - a clamp mechanism and - - two connector parts defining a passage for said drive shaft, each connector part having: - a peripheral wall, - a first side with a connector interface , - a second, opposite side with a connector flange , and - a peripheral face for engagement by said clamp mechanism , each connector part being connected to one of said valve unit and said actuator via its connector flange , - said connector interfaces each including ribs separated by recesses and being configured for mating engagement with each other by said ribs being received by said recesses , for positioning said actuator in at least two positions relative to said valve unit, - said clamp mechanism including a pair of movable wings , said wings both being pivotally connected only to the same connector part and moving to a clamping position by a turning movement, each wing extending around a respective portion of said two connector parts , - each of said wings having opposite side flanges configured for riding on said faces of said connector parts upon said wings being moved towards said side walls into said clamping position.

Further aspects of the invention are defined in the dependent claims.

In some embodiments the connector of the invention may also allow the actuator to be mounted at a desired, well-defined angle, such as 45° or 90 °, relative to the pipe string extending from the ball valve unit, which may be of particular advantage where many actuators need to be placed close to one another. In other embodiments the entire clamp mechanism is mountable as such to one of the connector parts thereby remaining fixed thereto when the other connector part is removed together with the actuator, for service of the latter.

### Brief description of the drawings

Fig. 1 shows, in a perspective view, an assembly of the invention,
Fig. 2a shows, in a perspective view, a ball valve unit and a connector part of the connector of the assembly of the invention,
Fig. 2b shows, in a perspective view, the connector part of fig. 2a,
Fig. 2c shows two connector parts of the type shown in fig. 2b,
Fig. 2d shows the connector part of fig. 2b being mounted onto the ball valve unit of fig. 2a,
Figs. 3a-3c show parts of a clamping mechanism of the connector of the invention,
Figs. 4a-4d illustrate steps carried out in the process of forming the assembly of fig. 1, and
Figs. 5a-5c are perspective and side views of an alternative embodiment of the connector part of the connector of the invention.

### Detailed description

The invention will now be explained in more detail below by reference to the drawings.

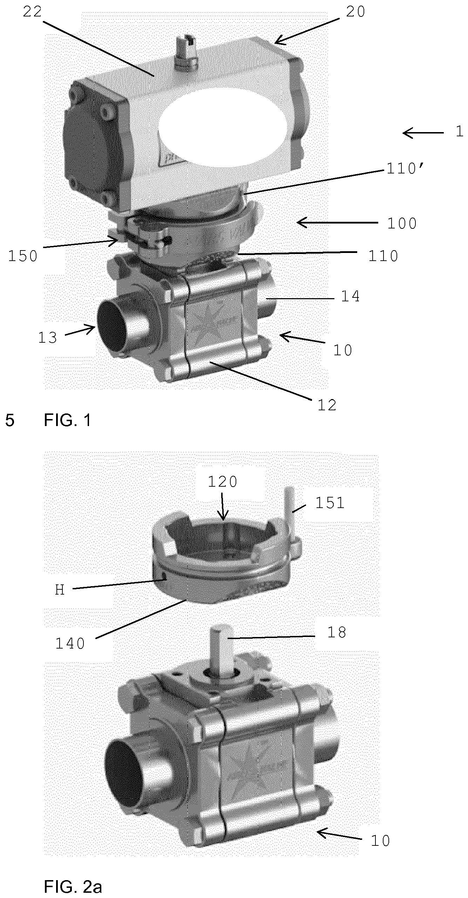

Fig. 1 shows an assembly 1 comprising i) an industrial ball valve unit 10, ii) an actuator 20, and iii) a connector 100 releasably connecting the ball valve unit 10 to the actuator 20, the connector 100 and the assembly 1 being in accordance with the present invention. The ball valve unit 10 has a housing 12 with opposite ports 13, 14 to which pipes (not shown) connect. An elongated actuator shaft (not visible in fig. 1) extend from the housing 22 of the actuator 20 and engage with the ball valve unit 10 such that rotation of the actuator shaft, normally by 90°, brings about a corresponding rotation of the ball valve so as to control the flow of a fluid flowing in the pipes.

An assembly 1 as shown may find particular use in process plants with multiple pipe strings and branches; in such plants conventionally there may be hundreds of actuators, each being coupled to a respective ball valve unit. Conventionally, the actuator is mounted to the ball valve unit by means of an intermediate support/attachment in the form of a bracket having connector portions secured by bolts to the actuator housing on the one side and to the ball valve housing on the other side; ISO 5211 sets standards for the dimensions of flanges and bolt holes for such intermediate supports/attachments.

In such process plants it is normally necessary to service the actuators at least once a year; this requires the actuator to be removed and/or replaced by maintenance staff, which procedure is cumbersome and time-consuming in that several bolts need to be removed from each actuator housing using a wrench that needs to be positioned and operated in the narrow space between the actuator housing and the ball valve housing. Where the process plant includes hundreds of actuators requiring service the procedure of removing and/or replacing all the actuators may take several days per year. As indicated in the introduction the present invention provides a connector allowing a relatively speedy disengagement and engagement of the actuator. In some embodiments the connector of the invention may also allow the actuator to be mounted at a desired, well-defined angle, such as 45°, relative to the pipe string extending from the ball valve unit, which may be of particular advantage where many actuators need to be placed close to one another.

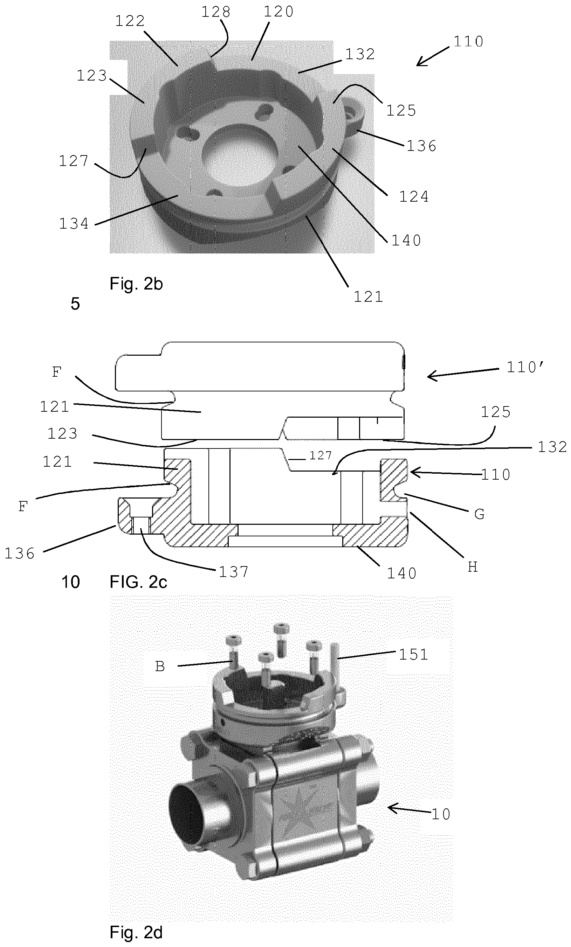

The connector 100 of the present invention comprises a metal clamp mechanism 150 and two metal connector parts 110, 110', each connector part 110, 110' having on a first side a connector interface 120 and on the second, opposite side a connector flange 140, as seen best in figs. 2b and 2c. Turning to fig. 2a this figure shows one such generally ring-shaped connector part 110 in the process of being mounted to the ball valve unit 10 with the drive shaft 18 for controlling the position of the valve body arranged for subsequent engagement with the actuator.

A connector 100 of the present invention may preferably include two completely identical such connector parts 110, 110', or the two connector parts 110, 110' may alternatively have differently configured connector flanges 140, by way of example to allow for actuators 20 of the same type to be connected to differently sized ball valve units 10. Alternatively, where the connector 100 includes two identical connector parts 110, 110' the connector flanges 140 thereof may each be configured to allow for being selectively secured to differently sized actuators 20/ball valve units 10.

As shown in fig. 1, when connected the two connector parts 110, 110' of the assembly 1 define a complete, protective cylindrical enclosure with a passage for the actuator shaft shown by numeral 18 in fig. 2a; the passage 1000 has two subparts along the length of the shaft 18, namely one subpart 1001 defined by one of the connector parts 110 and another subpart defined by the other 1002. Moreover, the connector 100 preferably defines a rigid structure that allows for the actuator 20 to be positioned in a horizontal plane, suspended from the ball valve unit 10 to the right or left thereof, or alternatively mounted above the ball valve unit 10, as shown in fig. 1, or below the ball valve unit 10. A passage H shown in fig. 2c conveniently allows for outflow of any fluid leaking from the ball valve unit 10 whereby failure or malfunction of the ball valve unit 10 may be detected.

Irrespectively of the design of their respective connector flange 140 will the connector parts 110, 110' have connector interfaces 120, preferably of identical configuration, configured to matingly engage each other to limit or prevent mutual rotation and sideway shifting perpendicular to the actuator shaft 18 of the two connector parts 110, 110' when in engagement, as explained below.

Fig. 2b is a perspective view of the connector part of fig. 2a. As seen, the connector interface 120 of the connector part 110 includes two ribs 122, 124 arranged opposite each other along the periphery of a connector part annular wall 121 and being separated by recesses 132, 134 having a peripheral extension along the wall 121 equal to or preferably greater than the peripheral extension of the ribs 122, 124 measured at the level of the top faces 123, 125 thereof. The end faces 127, 128 of the ribs 122, 124 are as shown preferably inclined to the vertical and converge such that the extension of the ribs122, 124 in the peripheral direction along the annular wall 121 decreases towards their top face 123, 125. Shown also is a protruding portion 136 protruding from the wall 121 and including an internally threaded through-going aperture defining an eye 137; a pivot pin 151 (see fig. 2a) threaded at one or both ends is inserted into and secured to this eye 137. Importantly, and seen best in fig. 2c, the peripheral wall has a peripheral groove G, the purpose of which will become apparent later.

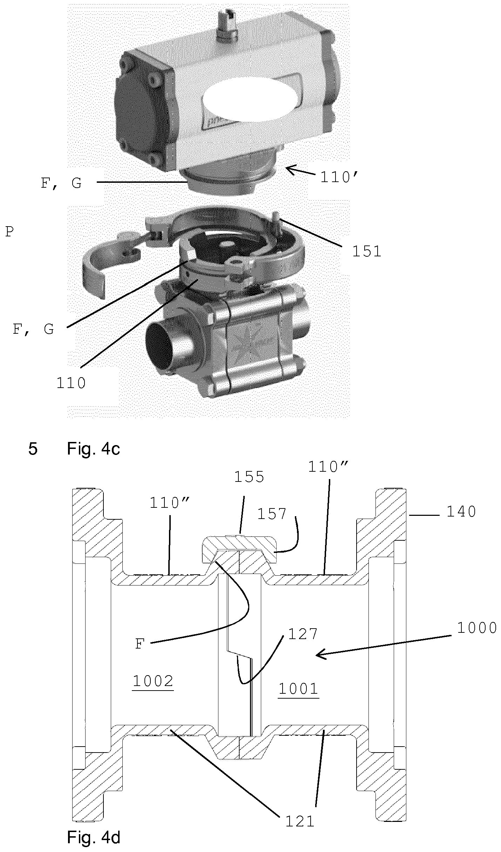

Fig. 2c is a side view of the connector part 110 of fig. 2b, illustrated together with another such connector part 110', the two connector parts 110, 110' being shown with their respective connector faces 120 facing each other, the lower one 110 of the two connector parts being shown in a cross-sectional view. On bringing the two connector parts 110 together opposite ribs 122, 124 of one connector part are received by opposite recesses 134, 136 of the other connector part whereby the top faces 123, 125 of one connector part is brought to approach the face of the recesses 132, 134 of the opposite connector part. Two connector parts 110, 110' preferably fit snugly together such that no mutual rotation is possible through the end faces 127, 128 of opposed ribs 122, 124 riding against each other, as shown in fig. 4d for another embodiment of the connector parts 110, 110', whereby the two connector parts 110, 110' are wedged together, the top faces 123, 125 of the ribs 122, 124 preferably barely contacting the faces of the recess 132, 134.

Preferably the two connector parts 110, 110' have interfaces 120 as shown in fig. 2b such that in the assembly 1 the actuator 20 may be placed only in two positions relative to the ball valve unit 10, a 180° rotation of the actuator 20 allowing for a mounting thereof to the ball valve unit 10 in the other position. However, by designing the two connector parts 110, 110' with four or even more opposite ribs 122, 124 separated by the same number of recesses the actuator 20 carrying one of the connector parts 110 may be positioned in a selected one of more than two angular positions relative to the ball valve unit 10, eg. in the position shown in fig. 1 and also in a position perpendicular, or eg. at 45°, to that position. In such case a particular calibration of the actuator 20 may be required to ensure a zero setting of the actuator corresponds a full opening or closure of the ball valve.

Fig. 2d shows how one of the connector parts 110 is connected to its associated structure, here illustrated as the ball valve unit 10, by bolts B extending through dedicated holes formed in the connector flange 140 in accordance with ISO standard 5211. The other connector part 110' is preferably connected to the actuator 20 in the same manner.

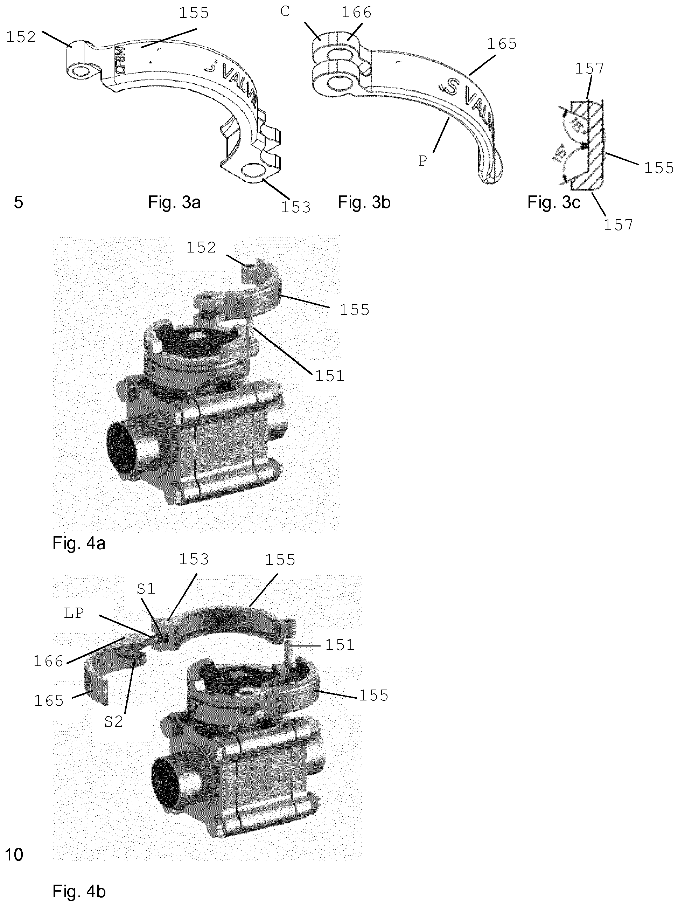

Figs. 3a and 3b show, respectively, one of two identical wings 155 and an eccentrically operating clamping arm 165, of the clamp mechanism 150 of the connector 100. Each wing 155 is a curved metal body having along its length a curvature corresponding to the curvature of the annular wall 121 of the connector parts 110, 110' and having a U-shaped cross-section with opposite side flanges 157, as shown in fig. 3c; the side flanges 157 are shaped to be received by the peripheral groove G of the side wall 121 of the connector parts 110, 110'. The wings 155 have extensions defining lugs 152, 153 at each end; a first lug 152 of each wing 155 receives the aforementioned pivot pin 151 and is preferably located off-set to one side of a central line of symmetry of the body of the wing 155. Another extension at the other end of the wing 155 defines a pair of lugs 153 for journaling a permanently mounted first pivot shaft, to be discussed below, for pivotally connecting one of the wings 155 to the clamping arm 165.

Fig. 4a shows a first step wherein one of the wings 155 is mounted to the pivot pin 151 by the eye 152 receiving the pivot pin 151. Next, the other wing 155 is mounted to the pivot pin 151 in the same manner, as shown in fig. 4b. Then, a nut is applied to the pivot pin 151 to maintain the two wings 155 secured to the eye 137 which is a part of the connector part 110 which is secured to the ball valve unit 10 by the bolts B shown in fig. 2d. Alternatively, both wings 155 may first receive a pivot pin 151 having a head at one end and being threaded at the other end, which pivot pin 151 is then screwed into the eye 137. Fig. 4b shows the aforementioned first pivot shaft, referenced as S1, connected to the pair of lugs 153 of one of the wings 155.

The clamping arm 165, shown in figs. 3b, 4b and 4c, has at a first end a pair of lugs 166 defining a through-going aperture for journaling a permanently mounted second pivot shaft S2 (see fig. 4b), and has a cam surface C as well as a portion P that a person may grip around. A locking pin LP connecting the first shaft S1 with the second shaft S2 extends transversally to the shafts S1, S2 between the lugs 166 and between the lugs 153. Through the journaling of the shafts S1, S2 the locking pin LP being fixedly connected to both shafts S1, S2 may turn relative to the wing 155 and the clamping arm 165.

To form the assembly shown in fig. 1 one proceeds as follows: a connector part 110' bolted to an actuator 20, as shown in fig. 4c, is mounted onto a connector part 110 already mounted onto a ball valve unit 10, with the wings 155 being secured to the latter connector part 110 and being spread apart. During this procedure the aforementioned ribs 122, 124 are brought into engagement. The wings 155 are then turned about pivot pin 151 such that the side flanges 157 thereof are received by the grooves G of the two connector parts 110, 110'. By gripping around the portion P the clamping arm 165 connected to one of the wings 155 is then turned about the pivot shafts S1, S2 towards the position shown in fig. 1 where the clamping arm 165 bears against the other one of the wings 155 and the locking pin LP is received between the lugs 153 of the second wing 155.

In this manner both wings 155 are forced together into a clamping position with each of their side flanges 157 being received in a corresponding peripheral groove G of a connector part 110, 110' and clamping the two connector parts 110, 110' together by a riding of the side flanges 157 against the face F of the groove G driving the two connector parts 110, 110' together with the end faces 127, 128 of the opposed ribs 122, 124 at the same time riding against each, as explained above. The riding of the side flanges 157 against a face F is shown in fig. 4d for an alternative embodiment where the face F is defined by an outer surface of the connector part 110, rather than by the aforementioned groove G.

In the position shown in fig. 1 the cam surface C riding on the lugs 153 of the aforementioned other one of the wings 155 prevents ready release of the clamp mechanism 150 and disengagement of the connection between the connector parts 110, 110' until a time where a user turns the clamping arm 165 about the pivot shafts S1, S2 such that the cam surface C again rides on the lugs 153.

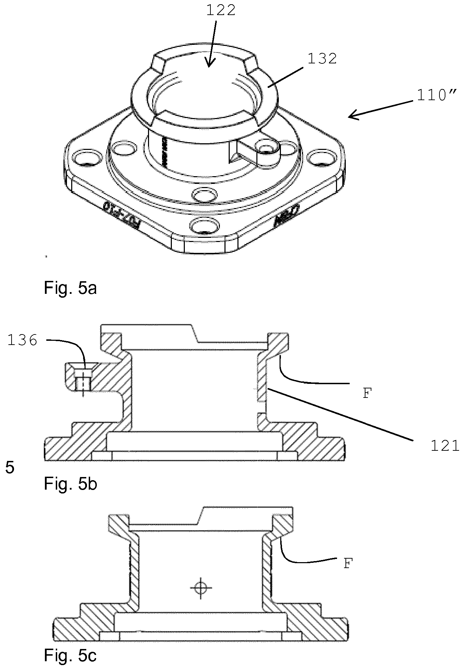

Figs. 5a, 5b and 5c show another, similar connector part 110" of a connector 100 of the invention, also shown in fig. 4d. This connector part 110" has the aforementioned ribs 122 and recesses 132 and may be matingly connected to the connector part 110 of fig. 2b, or to another identical connector part 110". The connector part 110" of fig. 5a has a relatively large flange 140 with two series of holes for receiving bolts B and allowing the connector part 110" to be secured to a large size actuator/ball valve unit. The annular wall 121 may as shown have an extension/dimension away from the flange 140 larger than that of the connector part 110 of fig. 2b.

## Claims

1. An assembly (1) comprising:
- a valve unit (10), such as a ball valve unit (10),
- an actuator (20),
- a valve drive shaft (18), and
- a connector (100) releasably connecting said valve unit (10) to said actuator (20), said connector (100) comprising:
- - a clamp mechanism (150) and
- - two connector parts (110, 110', 110") defining a passage for said drive shaft (18),
each connector part (110, 110', 110") having:
- a peripheral wall (121),
- a first side with a connector interface (120),
- a second, opposite side with a connector flange (140), and
- a peripheral face (F) for engagement by said clamp mechanism (150), each connector part (110, 110', 110") being connected to one of said valve unit (10) and said actuator (20) via its connector flange (140),
- said connector interfaces (120) each including ribs (122, 124) separated by recesses (132, 134) and being configured for mating engagement with each other by said ribs (122, 124) being received by said recesses (132, 134), for positioning said actuator (20) in at least two positions relative to said valve unit (10),
- said clamp mechanism (150) including a pair of movable wings (155), said wings (155) both being pivotally connected only to the same connector part (110) and moving to a clamping position by a turning movement, each wing (155) extending around a respective portion of said two connector parts (110, 110'),
- each of said wings (155) having opposite side flanges (157) configured for riding on said faces (F) of said connector parts (110, 110') upon said wings (155) being moved towards said side walls (121) into said clamping position.

2. The assembly of claim 1, said two connector parts (110, 110', 110") fully enclosing said drive shaft (18) extending in said passage.

3. The assembly of claim 1 or 2, said clamping mechanism (150) further including a clamping arm (165) for said movement of said wings (155), said clamping arm (165) being configured for releasably maintaining said wings (155) in said clamping position.

4. The assembly according to any of the previous claims, said ribs (122, 124) each having a top face (123, 125) and end faces (127, 128), said end faces (127, 128) being inclined so as to converge towards said top face (123, 125), said connector interfaces (120) contacting each other by said end faces (127, 128) riding on each other when said wings (155) are moved towards said clamping position.

5. The assembly according to any of the previous claims, said two connector parts (110, 110', 110") having three or more ribs (122, 124) separated by the same number of recesses (132, 134).

## Patentansprüche

1. Anordnung (1), umfassend:
- eine Ventileinheit (10), wie eine Kugelventileinheit (10),
- einen Aktuator (20),
- eine Ventilantriebswelle (18) und
- einen Konnektor (100), der die Ventileinheit (10) lösbar mit dem Aktuator (20) verbindet, wobei der Konnektor (100) umfasst:
- - einen Klemmmechanismus (150) und
- - zwei Konnektorteile (110, 110', 110"), die einen Durchgang für die Antriebswelle (18) definieren,
wobei jeder Konnektorteil (110, 110', 110") Folgendes aufweist:
- eine Umfangswand (121),
- eine erste Seite mit einer Konnektorschnittstelle (120),
eine zweite, gegenüberliegende Seite mit einem Konnektorflansch (140) und
- eine Umfangsfläche (F) zum Eingriff durch den Klemmmechanismus (150),
- wobei jedes Konnektorteil (110, 110', 110") über seinen Konnektorflansch (140) mit einer der Ventileinheiten (10) und dem Aktuator (20) verbunden ist,
- wobei die Konnektorschnittstellen (120) jeweils Rippen (122, 124) aufweisen, die durch Ausnehmungen (132, 134) getrennt sind und zu einen Gegeneingriff miteinander konfiguriert sind, indem die Rippen (122, 124) von den Aussparungen (132, 134) aufgenommen werden, um den Aktuator (20) in mindestens zwei Positionen relativ zur Ventileinheit (10) zu positionieren,
- wobei der Klemmmechanismus (150) ein Paar beweglicher Flügel (155) enthält, wobei die Flügel (155) beide nur mit dem gleichen Konnektorteil (110) schwenkbar verbunden sind und sich durch eine Drehbewegung in eine Klemmposition bewegen, wobei jeder Flügel (155) sich um einen jeweiligen Abschnitt der beiden Konnektorteile (110, 110') erstreckt,
- wobei jeder der Flügel (155) gegenüberliegende Seitenflansche (157) aufweist, die konfiguriert sind, um auf den Flächen (F) der Konnektorteile (110, 110') zu fahren, wenn die Flügel (155) in Richtung der Seitenwände (121) in die Klemmposition bewegt werden.

2. Anordnung nach Anspruch 1, wobei die beiden Konnektorteile (110, 110', 110") die Antriebswelle (18), die sich im Durchgang erstreckt, vollständig umschließen.

3. Anordnung nach Anspruch 1 oder 2, wobei der Klemmmechanismus (150) ferner einen Klemmarm (165) für die Bewegung der Flügel (155) umfasst, wobei der Klemmarm (165) zum lösbaren Halten der Flügel (155) in der Klemmposition konfiguriert ist.

4. Anordnung nach einem der vorhergehenden Ansprüche, wobei die Rippen (122, 124) jeweils eine Oberfläche (123, 125) und Endflächen (127, 128) aufweisen, wobei die Endflächen (127, 128) so geneigt sind, dass sie zur Oberfläche (123, 125) hin konvergieren, wobei die Konnektorschnittstellen (120) miteinander in Kontakt kommen, dadurch dass die Endflächen (127, 128) aufeinander fahren, wenn die Flügel (155) in Richtung der Klemmposition bewegt werden.

5. Anordnung nach einem der vorhergehenden Ansprüche, wobei die beiden Konnektorteile (110, 110', 110") drei oder mehr Rippen (122, 124) aufweisen, die durch die gleiche Anzahl von Aussparungen (132, 134) getrennt sind.

## Revendications

1. Ensemble (1) comprenant :
- une unité de soupape (10), telle qu'une unité de soupape à bille (10),
- un actionneur (20),
- un arbre d'entraînement de soupape (18), et
- un connecteur (100) reliant de manière amovible ladite unité de soupape (10) audit actionneur (20), ledit connecteur (100) comprenant :
- - un mécanisme de serrage (150) et
- - deux parties de connecteur (110, 110', 110") définissant un passage pour ledit arbre d'entraînement (18),
chaque partie de connecteur (110, 110', 110") ayant :
- une paroi périphérique (121),
- un premier côté avec une interface de connecteur (120),
- un deuxième côté opposé avec une bride de raccordement (140), et
- une face périphérique (F) pour l'engagement par ledit mécanisme de serrage (150),
chaque partie de connecteur (110, 110', 110") étant reliée à l'un de ladite unité de soupape (10) et dudit actionneur (20) via sa bride de connecteur (140),
- lesdites interfaces de connecteur (120) comprenant chacune des nervures (122, 124) séparées par des évidements (132, 134) et étant configurées pour s'engager de manière appariée l'une avec l'autre par lesdites nervures (122, 124) reçues par lesdits évidements (132, 134), pour positionner ledit actionneur (20) dans au moins deux positions par rapport à ladite unité de soupape (10),
- ledit mécanisme de serrage (150) comprenant une paire d'ailes mobiles (155), chaque aile (155) étant à la fois reliée à pivotement uniquement à la même partie de connecteur (110) et se déplaçant vers une position de serrage par un mouvement tournant, chaque aile (155) s'étendant autour d'une partie respective desdites deux parties de connecteur (110, 110'),
- chacune desdites ailes (155) ayant des rebords latéraux opposés (157) configurés pour chevaucher sur lesdites faces (F) desdites parties de connecteur (110, 110') lorsque lesdites ailes (155) sont déplacées vers lesdites parois latérales (121) dans ladite position de serrage.

2. Ensemble selon la revendication 1, lesdites deux parties de connecteur (110, 110', 110") enfermant entièrement ledit arbre d'entraînement (18) s'étendant dans ledit passage.

3. Ensemble selon la revendication 1 ou 2, ledit mécanisme de serrage (150) comprenant en outre un bras de serrage (165) pour ledit mouvement desdites ailes (155), ledit bras de serrage (165) étant configuré pour maintenir de manière libérable lesdites ailes (155) dans ladite position de serrage.

4. Ensemble selon l'une quelconque des revendications précédentes, lesdites nervures (122, 124) ayant chacune une face supérieure (123, 125) et des faces d'extrémité (127, 128), lesdites faces d'extrémité (127, 128) étant inclinées de manière à converger vers ladite face supérieure (123, 125), lesdites interfaces de connecteur (120) se mettant en contact l'une avec l'autre par lesdites faces d'extrémité (127, 128) chevauchant l'une sur l'autre lorsque lesdites ailes (155) sont déplacées vers ladite position de serrage.

5. Ensemble selon l'une quelconque des revendications précédentes, lesdites deux parties de connecteur (110, 110', 110") ayant trois nervures ou plus (122, 124) séparées par le même nombre d'évidements (132, 134).
